# EUROPÄISCHE PATENTSCHRIFT

(11) **EP 2 978 618 B1**
(45) Veröffentlichungstag und Bekanntmachung des Hinweises auf die Patenterteilung: **09.01.2019**
(21) Anmeldenummer: 14710513.4
(22) Anmeldetag: 07.03.2014
(51) Int. Cl.: B60G 21/05, F16F 13/14

(54) **ACHSFÜHRUNGSLAGER ZUR ANKOPPLUNG EINER HINTERACHSE AN EINEN FAHRZEUGAUFBAU EINES KRAFTFAHRZEUGS UND VERBUNDLENKER-HINTERACHSE**
AXLE GUIDE BEARING FOR COUPLING A REAR AXLE TO A BODY OF A MOTOR VEHICLE AND TORSION-BEAM REAR AXLE
COUSSINET DE GUIDAGE D'ESSIEU POUR L'ACCOUPLEMENT D'UN ESSIEU ARRIÈRE À UNE CARROSSERIE DE VÉHICULE AUTOMOBILE ET ESSIEU À TRAVERSE DÉFORMABLE

(30) Priorität: 30.03.2013 DE 102013005543
(43) Veröffentlichungstag der Anmeldung: 03.02.2016
(73) Patentinhaber: Volkswagen Aktiengesellschaft, 38440 Wolfsburg (DE)
(72) Erfinder: HÜBNER, Ulrich, 38547 Calberlah (DE); PIRL, Dennis, 38461 Danndorf (DE); MÖDEKER, Harald, 38547 Calberlah (DE)
(86) Internationale Anmeldenummer: PCT/EP2014/054480
(87) Internationale Veröffentlichungsnummer: WO 2014/161702

(56) Entgegenhaltungen:
- EP-A1- 1 217 249
- DE-A1-102009 040 163
- US-A1- 2007 296 128

## Beschreibung

Die Erfindung bezieht sich auf ein Achsführungslager zur Ankopplung einer Hinterachse an einen Fahrzeugaufbau eines Kraftfahrzeugs nach dem Oberbegriff von Patentanspruch 1. Weiterhin bezieht sich die Erfindung auf eine Verbundlenker-Hinterachse nach dem Oberbegriff von Patentanspruch 9.

Bei Personenkraftwagen sind Verbundlenkerachsen, worunter vorliegend im weiteren Sinn auch Koppellenkerachsen verstanden werden, aufgrund ihres einfachen Aufbaus sowie ihrer guten Funktionseigenschaften als Hinterachsen weit verbreitet.

Sie umfassen in der Regel zwei mehr oder weniger in Fahrzeuglängsrichtung verlaufende Längslenker, die mit einem vorderen Endabschnitt am Fahrzeugaufbau schwenkbar angekoppelt sind, sowie einen die Längslenker verbindenden biegesteifen, jedoch torsionsweichen Querträger. An hinteren Endabschnitten der Längslenker ist jeweils ein Fahrzeugrad angeordnet.

Die schwenkbare Ankopplung der Hinterachse am Fahrzeugaufbau erfolgt mit Hilfe von sogenannten Achsführungslagern, die üblicherweise als Gummi-Metall-Lager ausgeführt sind. Diese beeinflussen sowohl die Komforteigenschaften der Hinterachse als auch deren Fahreigenschaften in Hinblick auf ein gewolltes Eigenlenkverhalten. Beides ist jedoch schwer miteinander zu vereinen. Für einen hohen Fahrkomfort und eine gute akustische Entkopplung der Hinterachse vom Fahrzeugaufbau ist eine weiche Ankopplung mit einer niedrigen Federsteifigkeit wünschenswert. Für eine gute Fahrdynamik und eine hohe Lebensdauer ist hingegen eine hohe Federsteifigkeit von Vorteil. Herkömmliche Achsführungslager stellen daher in der Regel einen Kompromiss aus den genannten Anforderungen dar.

Ein Achsführungslager der eingangs genannten Art ist aus DE 10 2009 040 163 A1 bekannt. Über derartige Achsführungslager können Schwingungen auf den Fahrzeugaufbau übertragen werden.

Zur Schwingungsentkopplung ist es bereits bekannt, sogenannte Hydrolager zu verwenden, bei denen in einen Gummikörper flüssigkeitsgefüllte Kammern eingebettet sind. Beispiele hierfür finden sich unter anderem in DE 38 18 287 A1, US 4,899,997 und US 2006/0076721 A1. Diese bekannten Hydrolager eignen sich jedoch nicht ohne Weiteres für die Abstützung einer Verbundlenkerachse am Fahrzeugaufbau.

Ein Achsführungslager und eine Verbundlenker-Hinterachse der eingangs genannten Art sind aus EP 1 217 249 A1 bekannt.

Der Erfindung liegt die Aufgabe zugrunde eine die Bedämpfung einer Verbundlenker-Hinterachseweiter zu verbessern.

Diese Aufgabe wird durch ein Achsführungslager zur Ankopplung einer Hinterachse an einen Fahrzeugaufbau gemäß Patentanspruch 1 gelöst.

Der erste Gummikörper ist an die Anschlagscheibe sowie an einen Kragen am axialen Endabschnitt der Außenhülse angeklebt oder anvulkanisiert. Bei Federbewegungen der Achse im Fahrbetrieb kann es hierdurch nicht zu Relativbewegungen zwischen dem Gummikörper und feststehenden Bauteilen wie z.B. der Anschlagscheibe kommen, wodurch Geräusche und Verschleiß durch Abrieb verhindert werden. Ein Fetten der axialen Anlageflächen des Gummikörpers, wie es bei herkömmlichen Gummi-Metall-Lagern erforderlich ist, kann somit entfallen.

Die oben genannte Aufgabe wird ferner durch eine Verbundlenker-Hinterachse gemäß Patentanspruch 9 gelöst.

Die Achsführungslager befinden sich jeweils an einem in Vorwärtsfahrtrichtung vornliegenden Endabschnitt zweier im Wesentlichen in Fahrzeuglängsrichtung verlaufender Längslenker und ermöglichen die schwenkbare Ankopplung an einen Fahrzeugaufbau. Die Schwenkachse verläuft im Wesentlichen horizontal und im Wesentlichen quer zur Vorwärtsfahrtrichtung.

Mit der vorliegenden Erfindung werden eine hydraulische gedämpfte Längskraftabstützung und eine Seitenkraftabstützung einer Kraftfahrzeughinterachse in eine kompakte Baueinheit integriert.

Hierdurch wird zum einen ein sehr direktes Ansprechen bei Seitenkräften erzielt, da auf die Hinterachse einwirkende Seitenkräfte direkt über den zwischen dem axialen Endabschnitt der Außenhülse und der Anschlagscheibe befindlichen ersten Gummikörper in die Anschlagscheibe und damit in den Fahrzeugaufbau eingeleitet werden.

Zum anderen ergibt sich die Möglichkeit einer guten Entkopplung der Federsteifigkeiten in Fahrzeugslängs- und -querrichtung verbunden mit entsprechenden Abstimmmöglichkeiten zur Fahrwerksoptimierung. Aufgrund der flüssigkeitsgefüllten Kammern wird zudem die Übertragung von Schwingungen auf den Fahrzeugaufbau gemindert. Über die integrierten Anschlagkörper lässt sich auf einfache Art und Weise der Lagerweg in und entgegen der Vorwärtsfahrtrichtung abstimmen, wodurch die Fahrdynamik verbessert werden kann.

Vorteilhafte Ausgestaltungen sind in weiteren Patentansprüchen angegeben.

So kann beispielsweise der durch den ersten Anschlagkörper begrenzte maximale Lagerweg größer eingestellt werden als der durch den zweiten Anschlagkörper begrenzte maximale Lagerweg. Dies ermöglicht ein komfortables Abrollen der Fahrzeugräder.

In diesem Zusammenhang ist es weiterhin von Vorteil, wenn das Achsführungslager in Bezug auf Kräfte, die entgegen der Vorwärtsfahrtrichtung an der Hinterachse wirken, eine geringere Steifigkeit aufweist, als gegenüber Kräften, die in Vorwärtsfahrtrichtung an der Hinterachse wirken. Diese richtungsabhängige Steifigkeit kann beispielsweise durch eine entsprechende Ausgestaltung des zweiten Gummikörpers verwirklicht werden.

Vorzugsweise sind der erste Gummikörper und der zweite Gummikörper separate Bauteile. Diese können so leicht aus unterschiedlichem Werkstoff hergestellt werden, wodurch eine noch weitergehende Abstimmung des Fahrwerks ermöglicht wird. Grundsätzlich ist es jedoch auch möglich, den ersten und zweiten Gummikörper in ein einstückiges Element zu integrieren.

Unter Gummikörpern werden vorliegend nicht nur Körper aus natürlichem Gummi, sondern auch solche aus anderen, in Gummi-Metall-Lagern üblicherweise eingesetzten Elastomeren verstanden.

Bevorzugt erstreckt sich die Anschlagscheibe des aufbauseitig festgelegten Innenteils radial soweit nach außen, dass diese einem axialen Endabschnitt der Außenhülse gegenüberliegt und dabei von diesem durch den Gummikörper beabstandet ist. Der Gummikörper erstreckt sich somit radial in den Bereich zwischen der Anschlagscheibe und dem axialen Endabschnitt der Außenhülse hinein. Hierdurch ist trotz Festlegung des Gummikörpers an der feststehenden Anschlagscheibe eine Schwenkbarkeit der Achse relativ zum Fahrzeugaufbau gegeben. Der Abstand zwischen Anschlagscheibe und axialem Endabschnitt der Außenhülse ist unter Berücksichtigung der Materialeigenschaften des eingesetzten Elastomermaterials so gewählt, dass die Haftung des Gummikörpers an der Anschlagscheibe nicht beeinträchtigt wird.

Gemäß einer weiteren vorteilhaften Ausgestaltung sind die Anschlagkörper am Innenumfang der Außenhülse ausgebildet oder befestigt, wodurch die Herstellung des Achsführungslagers vereinfacht wird.

Ferner kann den Anschlagkörpern in Richtung des Zapfens jeweils ein Gummiblock in Form eines Teilabschnitts des zweiten Gummikörpers gegenüberliegen. Hierdurch wird ein abrupter Anschlag vermieden. Alternativ order ergänzend können hierzu auch die Anschlagkörper als Gummiblöcke ausgebildet werden.

Gemäß einer weiteren vorteilhaften Ausgestaltung der Erfindung sind die erste flüssigkeitsgefüllte Kammer und die zweite flüssigkeitsgefüllte Kammer durch mindestens einen Drosselkanal miteinander verbunden. Hierdurch kann die Dämpfung im Vergleich zu abgeschlossenen Kammern deutlich erhöht werden. Über den Drosselkanal, insbesondere dessen Länge und Querschnitt, kann zudem das Ausmaß der Dämpfung abgestimmt werden.

Nachfolgend wird die Erfindung anhand eines in der Zeichnung näher dargestellten Ausführungsbeispiels näher erläutert. Die Zeichnung zeigt in
- Figur 1: eine schematische Ansicht eines Ausführungsbeispiels einer Verbundlenker-Hinterachse nach der Erfindung von oben, und in
- Figur 2: eine Horizontalschnittansicht eines erfindungsgemäßen Achsführungslagers.

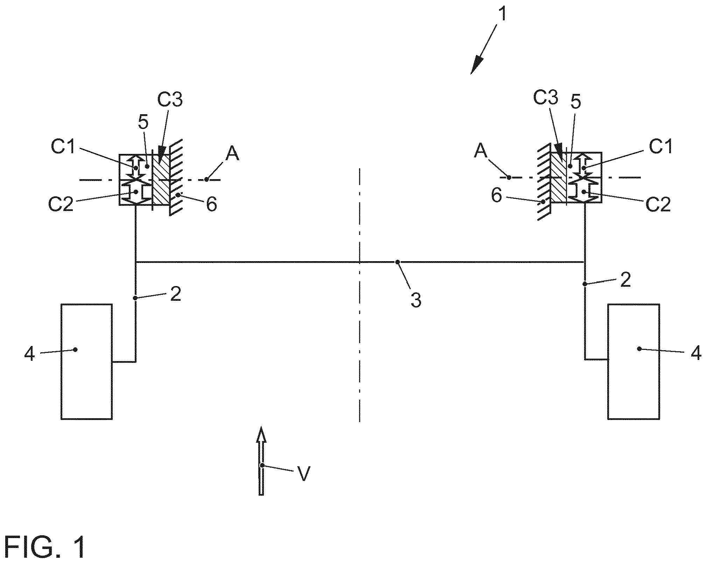

Die in Figur 1 dargestellte Verbundlenker-Hinterachse 1 umfasst zwei überwiegend in Fahrzeuglängsrichtung verlaufende Längslenker 2, die mittels eines Querträgers 3 verbunden sind. Der Querträger 3 ist in bekannter Art und Weise biegesteif, jedoch torsionsweich ausgeführt. An einem hinteren Endabschnitt jedes Längslenkers 2 befindet sich ein Radträger zur Lagerung eines Fahrzeughinterrads 4. Ferner ist jeder Längslenker 2 an einem vorderen Endabschnitt mittels eines Achsführungslagers 5 an einem Fahrzeugaufbau 6 angekoppelt.

Bei dem dargestellten Ausführungsbeispiel verläuft die Schwenkachse A der Achsführungslager 5 horizontal und quer zur Fahrzeuglängsrichtung bzw. Vorwärtsfahrtrichtung V. Von einer solchen Ausrichtung kann jedoch sowohl bezüglich der Horizontalrichtung als auch bezüglich des Anstellwinkels zur Fahrzeuglängsrichtung in einer Größenordnung bis zu etwa 25° abgewichen werden.

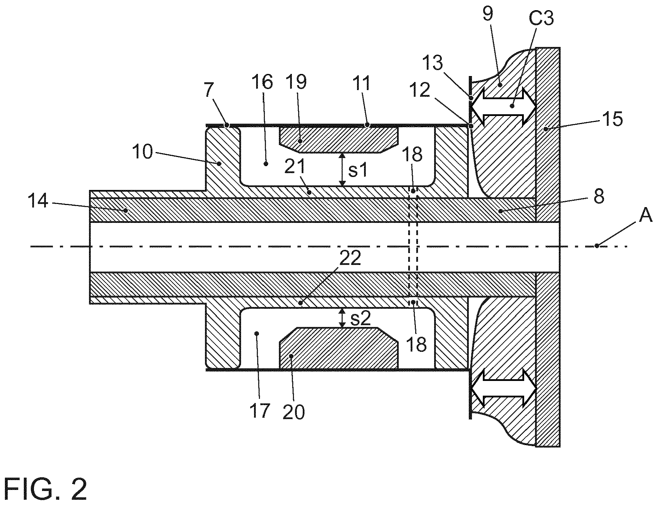

Das Achsführungslager 5 ist in Figur 2 näher dargestellt. Es umfasst eine Außenhülse 7 zur Ankopplung an die Hinterachse 1 und ein Innenteil 8 zur feststehenden Anordnung am Fahrzeugaufbau 6. Zwischen der Außenhülse 7 und dem Innenteil 8 sind ein erster Gummikörper 9 zur Abstützung von Axialkräften in Richtung der Schwenkachse A und ein zweiter Gummikörper 10 zur Abstützung von Kräften quer zur Schwenkachse A angeordnet. Die Gummikörper 9 und 10 ermöglichen dabei ein Verschwenken zwischen der Außenhülse 7 und dem Innenteil 8.

Die Außenhülse 7 weist einen zylindrischen Hülsenabschnitt 11 auf, an den an einem axialen Endabschnitt 12 ein radial abstehender Kragen 13 angeformt ist. Der Hülsenabschnitt 11 und der Kragen 13 können als zunächst getrennte Teile hergestellt und anschließend miteinander verbunden sein. Sie können jedoch auch in einem Teil hergestellt sein. In eingebautem Zustand ist die Außenhülse 7 fest mit einem Längslenker 2 oder einem Lagerbock verbunden. Sie wird bevorzugt in Metall ausgeführt, kann jedoch auch aus Kunststoff bestehen.

Das Innenteil 8 weist einen Zapfen 14 sowie eine Anschlagscheibe 15 auf. Die Anschlagscheibe 15 ist an einem axialen Endabschnitt des hier beispielhaft rohrförmig ausgebildeten Zapfens 14 angeordnet. Sie ist entweder an dem Zapfen 14 befestigt, beispielsweise angeschweißt, oder einstückig mit dem Zapfen 14 hergestellt. In Abwandlung des Ausführungsbeispiels kann die Anschlagscheibe 15 auch axial vor dem Zapfen 14 angeordnet, d. h. von diesem beabstandet sein. Beide Teile 14 und 15 können in diesem Fall über einen oder beide Gummikörper 9 und 10 verbunden sein.

Die Anschlagscheibe 15 kann mittels einer sich durch den Zapfen 14 erstreckenden Schraube oder dergleichen gemeinsam mit diesem sowie den Gummikörpern 9 und 10 gegen den Fahrzeugaufbau axial verspannt sein.

Wie Figur 2 zeigt, erstreckt sich das Innenteil 8 mit dem Zapfen 14 in die Außenhülse 7 hinein, wohingegen die Anschlagscheibe 15 von dem axialen Endabschnitt 12 der Außenhülse 7 in Axialrichtung beabstandet ist. Vorliegend weist die Anschlagscheibe 15 einen Außendurchmesser auf, der größer ist als der Innendurchmesser der Außenhülse 7. Im dargestellten Ausführungsbeispiel ist der Außendurchmesser der Anschlagscheibe 15 auch größer als der Außendurchmesser des Kragens 13, wodurch für den ersten Gummikörper 9 eine breite Befestigungsbasis geschaffen wird. Jedoch kann der Außendurchmesser der Anschlagscheibe 15 auch gleich oder kleiner als der Außendurchmesser des Kragens 13 ausgeführt sein.

Der erste Gummikörper 9 erstreckt sich in dem zwischen der Anschlagscheibe 15 und dem Kragen 13 gebildeten Ringraum radial nach innen bis zum Außenumfang des Zapfens 14. Er ist sowohl mit der Anschlagscheibe 15 als auch mit dem Kragen 13 angeklebt oder anvulkanisiert. Vorzugsweise ist der erste Gummikörper 9 vollflächig ohne Luftspalt an der Anschlagscheibe 15 befestigt. Das Innenteil 8 und damit die Anschlagscheibe 15 sind ihrerseits am Fahrzeugaufbau feststehend angeordnet. Bei Federbewegungen der Hinterachse 1 und einem damit einhergehenden Verschwenken der Längslenker 2 gegenüber dem Fahrzeugaufbau werden die ersten Gummikörper 9 der Achsführungslager 5 verformt. Aufgrund der festen Verbindung mit der Anschlagscheibe 15 und dem Kragen 13 können jedoch weder Verschleiß durch Abrieb noch Störgeräusche auftreten. Ein Fetten der genannten Stellen kann daher unterbleiben.

Zwischen dem Innenumfang der Außenhülse 7 und dem Außenumfang des Zapfens 14 ist der zweite Gummikörper 10 eingegliedert. Dieser ist zur Übertragung einer Schwenkbewegung sowohl am Innenumfang der Außenhülse 7 als auch am Außenumfang des Zapfens 14 festgelegt. Dazu kann der zweite Gummikörper 10 in den zwischen diesen gebildeten Ringraum eingepresst sein oder aber mit der Außenhülse 7 und dem Zapfen 14 verklebt oder an diese anvulkanisiert sein.

Im Hinblick auf eine akustische Entkopplung und ein komfortables Abrollen einerseits sowie eine gute Fahrdynamik andererseits sind die Achsführungslager 5 mit richtungsabhängig unterschiedlicher Lagersteifigkeit ausgebildet. Gegenüber Kräften, welche entgegen der Vorwärtsfahrtrichtung an der Hinterachse 1 angreifen, ist die Steifigkeit C1 des zweiten Gummikörpers 10 geringer als gegenüber Kräften, die in Fahrtrichtung wirken (Steifigkeit C2). Die unterschiedlichen Steifigkeiten lassen sich durch unterschiedliche Wanddicken und/oder unterschiedliche Formgebung verwirklichen. Es ist ferner auch möglich, in Fahrzeuglängsrichtung unterschiedliche Steifigkeiten C1 und C2 durch eine asymmetrische Konturierung des Zapfens 14 und/oder der Außenhülse 7 zu bewirken oder die vorgenanten Maßnahmen miteinander zu kombinieren. Die Steifigkeiten C1 und C2 können in Bezug auf die Fahrtrichtung auch anders, beispielsweise umgekehrt zu dem dargestellten Ausführungsbeispiel ausgerichtet sein.

Die Seitenkraftabstützung erfolgt überwiegend über den ersten Gummikörper 9, dessen Steifigkeit in Figur 1 mit C3 angedeutet ist. Dessen Abmessungen sind so gewählt, dass bei Federbewegungen der Hinterachse 1 der erste Gummikörper 9 nicht von der Anschlagscheibe 15 abgeschert wird.

Zur Dämpfung von Schwingungen, die über die Verbundlenkerachse in das Fahrzeug eingeleitet werden könnten, sind an dem zweiten Gummikörper 10 mindestens zwei flüssigkeitsgefüllte Kammern vorgesehen.

Figur 2 zeigt eine erste flüssigkeitsgefüllte Kammer 16, die in Bezug auf die Vorwärtsfahrtrichtung V des Kraftfahrzeugs vor dem Zapfen 14 angeordnet ist und eine zweite flüssigkeitsgefüllte Kammer 17, die in Bezug auf die Vorwärtsfahrtrichtung V hinter dem Zapfen 14 angeordnet ist. Bei dem dargestellten Ausführungsbeispiel werden diese Kammern 16 und 17 jeweils zwischen einem Außenumfangsabschnitt des zweiten Gummikörpers 10 und einem Innenumfangsabschnitt der Außenhülse 7 gebildet, da dies die Herstellung vereinfacht. Jedoch ist es auch möglich, die Kammern 16 und 17 als vom zweiten Gummikörper 10 umschlossene Hohlräume auszugestalten.

Zur Erhöhung der Dämpfungswirkung können die erste flüssigkeitsgefüllte Kammer 16 und die zweite flüssigkeitsgefüllte Kammer 17 durch einen oder mehrere Drosselkanäle 18 miteinander verbunden sein. Über Länge und/oder Querschnitt eines Drosselkanals lässt sich das Dämpfungsverhalten weiter modifizieren.

Weiterhin ist in der ersten flüssigkeitsgefüllten Kammer 16 ein erster Anschlagkörper 19 angeordnet, welcher den maximalen Lagerweg s1 des Achsführungslagers bei entgegen der Vorwärtsfahrtrichtung V auf die Hinterachse 1 einwirkenden Kräften begrenzt. In der zweiten flüssigkeitsgefüllten Kammer 17 ist ein zweiter Anschlagkörper 20 angeordnet ist, welcher den maximalen Lagerweg s2 des Achsführungslagers bei in Vorwärtsfahrtrichtung V auf die Hinterachse einwirkenden Kräften begrenzt.

Dabei ist im Hinblick auf Fahrdynamik und Fahrkomfort der durch den ersten Anschlagkörper 19 begrenzte maximale Lagerweg s1 größer als der durch den zweiten Anschlagkörper 20 begrenzte maximale Lagerweg s2.

Die Anschlagkörper 19 und 20 können, wie in Figur 2 dargestellt, am Innenumfang der Außenhülse 7 befestigt sein. Es ist jedoch auch möglich, diese an der Außenhülse 7 auszubilden, beispielsweise durch einwärts gerichtete Ausstellungen.

Den Anschlagkörpern 19 und 20 liegt in Richtung auf den Zapfen 14 hin jeweils ein Gummiblock 21, 22 in Form eines Teilabschnitts des zweiten Gummikörpers 10 gegenüber, so dass ein abrupter Anschlag vermieden wird. Dazu können gegebenenfalls auch die Anschlagkörper 19 und 20 als Gummiblöcke ausgebildet sein oder an ihrer zum Zapfen 14 weisenden Seite einen Gummiblock aufweisen.

In Abwandlung des Ausführungsbeispiels können die Kammern 16 und 17 auch zwischen Außenumfangsabschnitten der Zapfens 14 und Innenumfangsabschnitten des zweiten Gummikörpers 10 gebildet werden. Die Anschlagkörper 19 und 20 können sich in diesem Fall am Zapfen 14 abstützen. Ferner ist die Kombination beider Varianten möglich.

Die Erfindung wurde vorstehen anhand eines Ausführungsbeispiels näher erläutert. Sie ist jedoch nicht auf das Ausführungsbeispiele beschränkt und die dargestellten Abwandlungen beschränkt, welche lediglich beispielhafter Natur sind, um das Verständnis der Erfindung zu erleichtern. Insbesondere können summarisch oder im Kontext miteinander erläuterte Merkmale auch unabhängig voneinander verwirklich werden, wenn dies nicht ausdrücklich beschrieben ist, solange dies technisch möglich ist.

**Bezugszeichenliste**

| | | | |
|---|---|---|---|
| 1 | Hinterachse | 12 | axialer Endabschnitt |
| 2 | Längslenker | 13 | Kragen |
| 3 | Querträger | 14 | Zapfen |
| 4 | Fahrzeughinterrad | 15 | Anschlagscheibe |
| 5 | Achsführungslager | 16 | erste Kammer |
| 6 | Fahrzeugaufbau | 17 | zweite Kammer |
| 7 | Außenhülse | 18 | Drosselkanal |
| 8 | Innenteil | 19 | erster Anschlagkörper |
| 9 | erster Gummikörper | 20 | zweiter Anschlagkörper |
| 10 | zweiter Gummikörper | 21 | Gummiblock |
| 11 | Hülsenabschnitt | 22 | Gummiblock |

- A: Schwenkachse
- s1: maximalen Lagerweg des Achsführungslagers bei entgegen der Vorwärtsfahrtrichtung auf die Hinterachse einwirkenden Kräften
- s2: maximalen Lagerweg des Achsführungslagers bei in Vorwärtsfahrtrichtung auf die Hinterachse einwirkenden Kräften
- C1: Steifigkeit quer zur Schwenkachse gegenüber Kräften, die entgegen der Vorwärtsfahrtrichtung an der Hinterachse wirken
- C2: Steifigkeit quer zur Schwenkachse gegenüber Kräften, die in Vorwärtsfahrtrichtung an der Hinterachse wirken
- C3: Steifigkeit des ersten Gummikörpers in Richtung der Schwenkachse
- V: Vorwärtsfahrtrichtung

## Patentansprüche

1. Achsführungslager zur Ankopplung einer Hinterachse an einen Fahrzeugaufbau eines Kraftfahrzeugs, umfassend:
eine Außenhülse (7) zur Ankopplung an die Hinterachse, und
ein Innenteil (8) zur feststehenden Anordnung am Fahrzeugaufbau, das sich mit einem Zapfen (14) in die Außenhülse (7) hineinerstreckt und eine Anschlagscheibe (15) aufweist, die von einem axialen Endabschnitt (12) der Außenhülse (7) axial beabstandet ist,
einen ersten Gummikörper (9) zur Axialkraftabstützung, der zwischen dem axialen Endabschnitt (12) der Außenhülse (7) und der Anschlagscheibe (15) angeordnet ist, und einen zweiten Gummikörper (10), der zwischen dem Zapfen (14) und der Außenhülse (7) angeordnet ist,
wobei der erste Gummikörper (9) an die Anschlagscheibe (15) sowie an einen Kragen (13) am axialen Endabschnitt (12) der Außenhülse (7) angeklebt oder anvulkanisiert ist,
**dadurch gekennzeichnet, dass**
an dem zweiten Gummikörper (10) eine erste flüssigkeitsgefüllte Kammer (16) und eine zweite flüssigkeitsgefüllte Kammer (17) vorgesehen sind, wobei die erste flüssigkeitsgefüllte Kammer (16) in Bezug auf die Vorwärtsfahrtrichtung (V) des Kraftfahrzeugs vor und die zweite flüssigkeitsgefüllte Kammer (17) hinter dem Zapfen (14) angeordnet ist,
in der ersten flüssigkeitsgefüllten Kammer (16) ein erster Anschlagkörper (19) angeordnet ist, welcher den maximalen Lagerweg (s1) des Achsführungslagers bei entgegen der Vorwärtsfahrtrichtung auf die Hinterachse einwirkenden Kräften begrenzt, und
in der zweiten flüssigkeitsgefüllten Kammer (17) ein zweiter Anschlagkörper (20) angeordnet ist, welcher den maximalen Lagerweg (s2) des Achsführungslagers bei in Vorwärtsfahrtrichtung (V) auf die Hinterachse einwirkenden Kräften begrenzt.

2. Achsführungslager nach Anspruch 1, **dadurch gekennzeichnet, dass** der durch den ersten Anschlagkörper (19) begrenzte maximale Lagerweg (s1) größer ist als der durch den zweiten Anschlagkörper (20) begrenzte maximale Lagerweg (s2).

3. Achsführungslager nach Anspruch 1 oder 2, **dadurch gekennzeichnet, dass** das Achsführungslager in Bezug auf Kräfte, die entgegen der Vorwärtsfahrtrichtung an der Hinterachse wirken (V), eine geringere Steifigkeit aufweist, als gegenüber Kräften, die in Vorwärtsfahrtrichtung an der Hinterachse wirken.

4. Achsführungslager nach einem der Ansprüche 1 bis 3, **dadurch gekennzeichnet, dass** der erste Gummikörper (9) und der zweite Gummikörper (10) separate Bauteile sind.

5. Achsführungslager nach einem der Ansprüche 1 bis 4, **dadurch gekennzeichnet, dass** die Anschlagkörper (19, 20) am Innenumfang der Außenhülse (7) ausgebildet oder befestigt sind.

6. Achsführungslager nach einem der Ansprüche 1 bis 5, **dadurch gekennzeichnet, dass** den Anschlagkörpern (19, 20) in Richtung des Zapfens jeweils ein Gummiblock (21, 22) in Form eines Teilabschnitts des zweiten Gummikörpers (10) gegenüberliegt.

7. Achsführungslager nach einem der Ansprüche 1 bis 6, **dadurch gekennzeichnet, dass** die Anschlagkörper (19, 20) als Gummiblöcke ausgebildet sind.

8. Achsführungslager nach einem der Ansprüche 1 bis 7, **dadurch gekennzeichnet, dass** die erste flüssigkeitsgefüllte Kammer (16) und die zweite flüssigkeitsgefüllte Kammer (17) durch mindestens einen Drosselkanal (18) miteinander verbunden sind.

9. Verbundlenker-Hinterachse für Kraftfahrzeuge, umfassend:
zwei im Wesentlichen in Fahrzeuglängsrichtung verlaufende Längslenker (2), und
zwei Achsführungslager (5), wobei jedes Achsführungslager (5) umfasst:
eine Außenhülse (7) zur Ankopplung an die Hinterachse, und
ein Innenteil (8) zur feststehenden Anordnung am Fahrzeugaufbau, das sich mit einem Zapfen (14) in die Außenhülse (7) hineinerstreckt und eine Anschlagscheibe (15) aufweist, die von einem axialen Endabschnitt (12) der Außenhülse (7) axial beabstandet ist,
einen ersten Gummikörper (9) zur Axialkraftabstützung, der zwischen dem axialen Endabschnitt (12) der Außenhülse (7) und der Anschlagscheibe (15) angeordnet ist, und
einen zweiten Gummikörper (10), der zwischen dem Zapfen (14) und der Außenhülse (7) angeordnet ist,
wobei die Längslenker (2) jeweils an einem in Vorwärtsfahrtrichtung vornliegenden Endabschnitt mit einem Achsführungslager (5) um eine im Wesentlichen horizontale Achse im Wesentlichen quer zur Vorwärtsfahrtrichtung schwenkbar an einem Fahrzeugaufbau (6) ankoppelbar sind,
**dadurch gekennzeichnet, dass**
an dem zweiten Gummikörper (10) eine erste flüssigkeitsgefüllte Kammer (16) und eine zweite flüssigkeitsgefüllte Kammer (17) vorgesehen sind, wobei die erste flüssigkeitsgefüllte Kammer (16) in Bezug auf die Vorwärtsfahrtrichtung (V) des Kraftfahrzeugs vor und die zweite flüssigkeitsgefüllte Kammer (17) hinter dem Zapfen (14) angeordnet ist,
in der ersten flüssigkeitsgefüllten Kammer (16) ein erster Anschlagkörper (19) angeordnet ist, welcher den maximalen Lagerweg (s1) des Achsführungslagers bei entgegen der Vorwärtsfahrtrichtung auf die Hinterachse einwirkenden Kräften begrenzt, und
in der zweiten flüssigkeitsgefüllten Kammer (17) ein zweiter Anschlagkörper (20) angeordnet ist, welcher den maximalen Lagerweg (s2) des Achsführungslagers bei in Vorwärtsfahrtrichtung (V) auf die Hinterachse einwirkenden Kräften begrenzt.

10. Verbundlenker-Hinterachse nach Anspruch 9, **dadurch gekennzeichnet, dass** der durch den ersten Anschlagkörper (19) begrenzte maximale Lagerweg (s1) größer ist als der durch den zweiten Anschlagkörper (20) begrenzte maximale Lagerweg (s2).

11. Verbundlenker-Hinterachse nach Anspruch 9 oder 10, **dadurch gekennzeichnet, dass** das Achsführungslager in Bezug auf Kräfte, die entgegen der Vorwärtsfahrtrichtung an der Hinterachse wirken (V), eine geringere Steifigkeit aufweist, als gegenüber Kräften, die in Vorwärtsfahrtrichtung an der Hinterachse wirken.

12. Verbundlenker-Hinterachse nach einem der Ansprüche 9 bis 11, **dadurch gekennzeichnet, dass** der erste Gummikörper (9) und der zweite Gummikörper (10) separate Bauteile sind.

13. Verbundlenker-Hinterachse nach einem der Ansprüche 9 bis 12, **dadurch gekennzeichnet, dass** der erste Gummikörper (9) an die Anschlagscheibe (15) sowie an einen Kragen (13) am axialen Endabschnitt (12) der Außenhülse (7) angeklebt oder anvulkanisiert ist.

14. Verbundlenker-Hinterachse nach einem der Ansprüche 9 bis 13, **dadurch gekennzeichnet, dass** die Anschlagkörper (19, 20) am Innenumfang der Außenhülse (7) ausgebildet oder befestigt sind.

15. Verbundlenker-Hinterachse nach einem der Ansprüche 9 bis 14, **dadurch gekennzeichnet, dass** den Anschlagkörpern (19, 20) in Richtung des Zapfens jeweils ein Gummiblock (21, 22) in Form eines Teilabschnitts des zweiten Gummikörpers (10) gegenüberliegt.

16. Verbundlenker-Hinterachse nach einem der Ansprüche 9 bis 15, **dadurch gekennzeichnet, dass** die Anschlagkörper (19, 20) als Gummiblöcke ausgebildet sind.

17. Verbundlenker-Hinterachse nach einem der Ansprüche 9 bis 16, **dadurch gekennzeichnet, dass** die erste flüssigkeitsgefüllte Kammer (16) und die zweite flüssigkeitsgefüllte Kammer (17) durch mindestens einen Drosselkanal (18) miteinander verbunden sind.

## Claims

1. Axle guide bearing for coupling a rear axle to a body of a motor vehicle, comprising:
an outer sleeve (7) for coupling to the rear axle, and
an inner part (8) for the fixed arrangement on the vehicle body, said inner part extending with a journal (14) into the outer sleeve (7) and having a stop disc (15) which is spaced apart axially from an axial end portion (12) of the outer sleeve (7),
a first rubber body (9) for axial force absorption, which is arranged between the axis end portion (12) of the outer sleeve (7) and the stop disc (15), and a second rubber body (10) which is arranged between the journal (14) and the outer sleeve (7),
wherein the first rubber body (9) is adhesively bonded or vulcanized onto the stop disc (15) and onto a collar (13) on the axial end portion (12) of the outer sleeve (7),
**characterized in that** a first liquid-filled chamber (16) and a second liquid-filled chamber (17) are provided on the second rubber body (10), wherein the first liquid-filled chamber (16) is arranged in front of the journal (14), and the second liquid-filled chamber (17) is arranged behind the journal (14), with respect to the forwards direction of travel (V) of the motor vehicle,
a first stop body (19) is arranged in the first liquid-filled chamber (16), said stop body limiting the maximum bearing travel (s1) of the axle guide bearing in the event of forces acting on the rear axle counter to the forwards direction of travel, and
a second stop body (20) is arranged in the second liquid-filled chamber (17), said stop body limiting the maximum bearing travel (s2) of the axle guide bearing in the event of forces acting on the rear axle in the forwards direction of travel (V).

2. Axle guide bearing according to Claim 1, **characterized in that** the maximum bearing travel (s1) limited by the first stop body (19) is greater than the maximum bearing travel (s2) limited by the second stop body (20).

3. Axle guide bearing according to Claim 1 or 2, **characterized in that** the axle guide bearing has a lower rigidity with respect to forces which act on the rear axle counter to the forwards direction of travel (V) than in relation to forces which act on the rear axle in the forwards direction of travel.

4. Axle guide bearing according to one of Claims 1 to 3, **characterized in that** the first rubber body (9) and the second rubber body (10) are separate components.

5. Axle guide bearing according to one of Claims 1 to 4, **characterized in that** the stop bodies (19, 20) are formed on or fastened to the inner circumference of the outer sleeve (7).

6. Axle guide bearing according to one of Claims 1 to 5, **characterized in that** a rubber block (21, 22) in the form of a subsection of the second rubber body (10) in each case lies opposite the stop bodies (19, 20) in the direction of the journal.

7. Axle guide bearing according to one of Claims 1 to 6, **characterized in that** the stop bodies (19, 20) are in the form of rubber blocks.

8. Axle guide bearing according to one of Claims 1 to 7, **characterized in that** the first liquid-filled chamber (16) and the second liquid-filled chamber (17) are connected to each other by means of at least one throttle duct (18).

9. Twist-beam rear axle for motor vehicles, comprising:
two longitudinal links (2) running substantially in the longitudinal direction of the vehicle, and
two axle guide bearings (5), wherein each axle guide bearing (5) comprises:
an outer sleeve (7) for coupling to the rear axle, and
an inner part (8) for the fixed arrangement on the vehicle body, said inner part extending with a journal (14) into the outer sleeve (7) and having a stop disc (15) which is spaced apart axially from an axial end portion (12) of the outer sleeve (7), a first rubber body (9) for axial force absorption, which is arranged between the axial end portion (12) of the outer sleeve (7) and the stop disc (15), and a second rubber body (10) which is arranged between the journal (14) and the outer sleeve (7),
wherein the longitudinal links (2) can each be coupled to a vehicle body (6) at an end portion, which lies in front in the forwards direction of travel, with an axle guide bearing (5) so as to be pivotable about a substantially horizontal axis substantially transversely with respect to the forwards direction of travel,
**characterized in that**
a first liquid-filled chamber (16) and a second liquid-filled chamber (17) are provided on the second rubber body (10), wherein the first liquid-filled chamber (16) is arranged in front of the journal (14), and the second liquid-filled chamber (17) is arranged behind the journal (14), with respect to the forwards direction of travel (V) of the motor vehicle,
a first stop body (19) is arranged in the first liquid-filled chamber (16), said stop body limiting the maximum bearing travel (s1) of the axle guide bearing in the event of forces acting on the rear axle counter to the forwards direction of travel, and
a second stop body (20) is arranged in the second liquid-filled chamber (17), said stop body limiting the maximum bearing travel (s2) of the axle guide bearing in the event of forces acting on the rear axle in the forwards direction of travel (V).

10. Twist-beam rear axle according to Claim 9, **characterized in that** the maximum bearing travel (s1) limited by the first stop body (19) is greater than the maximum bearing travel (s2) limited by the second stop body (20).

11. Twist-beam rear axle according to Claim 9 or 10, **characterized in that** the axle guide bearing has a lower rigidity with respect to forces which act on the rear axle counter to the forwards direction of travel (V) than in relation to forces which act on the rear axle in the forwards direction of travel.

12. Twist-beam rear axle according to one of Claims 9 to 11, **characterized in that** the first rubber body (9) and the second rubber body (10) are separate components.

13. Twist-beam rear axle according to one of Claims 9 to 12, **characterized in that** the first rubber body (9) is adhesively bonded or vulcanized onto the stop disc (15) and onto a collar (13) on the axial end portion (12) of the outer sleeve (7).

14. Twist-beam rear axle according to one of Claims 9 to 13, **characterized in that** the stop bodies (19, 20) are formed on or fastened to the inner circumference of the outer sleeve (7).

15. Twist-beam rear axle according to one of Claims 9 to 14, **characterized in that** a rubber block (21, 22) in the form of a subsection of the second rubber body (10) in each case lies opposite the stop bodies (19, 20) in the direction of the journal.

16. Twist-beam rear axle according to one of Claims 9 to 15, **characterized in that** the stop bodies (19, 20) are in the form of rubber blocks.

17. Twist-beam rear axle according to one of Claims 9 to 16, **characterized in that** the first liquid-filled chamber (16) and the second liquid-filled chamber (17) are connected to each other by means of at least one throttle duct (18).

## Revendications

1. Coussinet de guidage d'essieu pour le raccordement d'un essieu arrière à une caisse de véhicule d'un véhicule automobile, comprenant :
un manchon extérieur (7) pour le raccordement à l'essieu arrière, et
une partie intérieure (8) pour l'agencement fixé à la caisse du véhicule, qui s'étend dans le manchon extérieur (7) avec un tourillon (14) et qui présente une rondelle de butée (15) qui est espacée axialement d'une portion d'extrémité axiale (12) du manchon extérieur (7),
un premier corps en caoutchouc (9) destiné à supporter les forces axiales, qui est disposé entre la portion d'extrémité axiale (12) du manchon extérieur (7) et la rondelle de butée (15), et un deuxième corps en caoutchouc (10) qui est disposé entre le tourillon (14) et le manchon extérieur (7), le premier corps en caoutchouc (9) étant collé ou vulcanisé sur la rondelle de butée (15) ainsi que sur un collet (13) au niveau de la portion d'extrémité axiale (12) du manchon extérieur (7),
**caractérisé en ce que**
une première chambre remplie de liquide (16) et une deuxième chambre remplie de liquide (17) sont prévues au niveau du deuxième corps en caoutchouc (10), la première chambre remplie de liquide (16) étant disposée, par rapport au sens de conduite vers l'avant (V) du véhicule automobile, avant le tourillon (14), et la deuxième chambre remplie de liquide (17) derrière le tourillon (14),
un premier corps de butée (19) est disposé dans la première chambre remplie de liquide (16), lequel limite la course maximale (s1) du coussinet de guidage d'essieu lorsque des forces agissent sur l'essieu arrière dans le sens opposé au sens de conduite vers l'avant, et un deuxième corps de butée (20) est disposé dans la deuxième chambre remplie de liquide (17), lequel limite la course maximale (s2) du coussinet de guidage d'essieu lorsque des forces agissent sur l'essieu arrière dans le sens de conduite vers l'avant (V).

2. Coussinet de guidage d'essieu selon la revendication 1, **caractérisé en ce que** la course maximale (s1) limitée par le premier corps de butée (19) est supérieure à la course maximale (s2) limitée par le deuxième corps de butée (20).

3. Coussinet de guidage d'essieu selon la revendication 1 ou 2, **caractérisé en ce que** le coussinet de guidage d'essieu présente, par rapport à des forces qui agissent sur l'essieu arrière dans le sens opposé au sens de conduite vers l'avant (V), une plus faible rigidité que par rapport à des forces qui agissent sur l'essieu arrière dans le sens de conduite vers l'avant.

4. Coussinet de guidage d'essieu selon l'une quelconque des revendications 1 à 3, **caractérisé en ce que** le premier corps en caoutchouc (9) et le deuxième corps en caoutchouc (10) sont des composants séparés.

5. Coussinet de guidage d'essieu selon l'une quelconque des revendications 1 à 4, **caractérisé en ce que** les corps de butée (19, 20) sont réalisés ou fixés sur la périphérie intérieure du manchon extérieur (7).

6. Coussinet de guidage d'essieu selon l'une quelconque des revendications 1 à 5, **caractérisé en ce qu'**un bloc en caoutchouc (21, 22) sous la forme d'une portion partielle du deuxième corps en caoutchouc (10) est à chaque fois opposé aux corps de butée (19, 20) dans la direction du tourillon.

7. Coussinet de guidage d'essieu selon l'une quelconque des revendications 1 à 6, **caractérisé en ce que** les corps de butée (19, 20) sont réalisés sous forme de blocs en caoutchouc.

8. Coussinet de guidage d'essieu selon l'une quelconque des revendications 1 à 7, **caractérisé en ce que** la première chambre remplie de liquide (16) et la deuxième chambre remplie de liquide (17) sont connectées l'une à l'autre par au moins un canal d'étranglement (18).

9. Essieu arrière à traverse déformable en torsion pour véhicules automobiles, comprenant :
deux bras oscillants longitudinaux (2) s'étendant essentiellement dans la direction longitudinale du véhicule et
deux coussinets de guidage d'essieu (5), chaque coussinet de guidage d'essieu (5) comprenant :
un manchon extérieur (7) pour le raccordement à l'essieu arrière, et
une partie intérieure (8) pour l'agencement fixé à la caisse du véhicule, qui s'étend dans le manchon extérieur (7) avec un tourillon (14) et qui présente une rondelle de butée (15) qui est espacée axialement d'une portion d'extrémité axiale (12) du manchon extérieur (7),
un premier corps en caoutchouc (9) destiné à supporter les forces axiales, qui est disposé entre la portion d'extrémité axiale (12) du manchon extérieur (7) et la rondelle de butée (15), et un deuxième corps en caoutchouc (10) qui est disposé entre le tourillon (14) et le manchon extérieur (7),
les bras oscillants longitudinaux (2) pouvant à chaque fois être accouplés au niveau d'une caisse de véhicule (6) à un coussinet de guidage d'essieu (5) de manière à pouvoir pivoter autour d'un axe essentiellement horizontal essentiellement transversalement au sens de conduite vers l'avant au niveau d'une portion d'extrémité située en avant dans le sens de conduite vers l'avant,
**caractérisé en ce**
**qu'**une première chambre remplie de liquide (16) et une deuxième chambre remplie de liquide (17) sont prévues au niveau du deuxième corps en caoutchouc (10), la première chambre remplie de liquide (16) étant disposée, par rapport au sens de conduite vers l'avant (V) du véhicule automobile, avant le tourillon (14), et la deuxième chambre remplie de liquide (17) derrière le tourillon (14),
un premier corps de butée (19) est disposé dans la première chambre remplie de liquide (16), lequel limite la course maximale (s1) du coussinet de guidage d'essieu lorsque des forces agissent sur l'essieu arrière dans le sens opposé au sens de conduite vers l'avant, et
un deuxième corps de butée (20) est disposé dans la deuxième chambre remplie de liquide (17), lequel limite la course maximale (s2) du coussinet de guidage d'essieu lorsque des forces agissent sur l'essieu arrière dans le sens de conduite vers l'avant (V).

10. Essieu arrière à traverse déformable en torsion selon la revendication 9, **caractérisé en ce que** la course maximale (s1) limitée par le premier corps de butée (19) est supérieure à la course maximale (s2) limitée par le deuxième corps de butée (20).

11. Essieu arrière à traverse déformable en torsion selon la revendication 9 ou 10 **caractérisé en ce que** le coussinet de guidage d'essieu présente, par rapport à des forces qui agissent sur l'essieu arrière dans le sens opposé au sens de conduite vers l'avant (V), une plus faible rigidité que par rapport à des forces qui agissent sur l'essieu arrière dans le sens de conduite vers l'avant.

12. Essieu arrière à traverse déformable en torsion selon l'une quelconque des revendications 9 à 11, **caractérisé en ce que** le premier corps en caoutchouc (9) et le deuxième corps en caoutchouc (10) sont des composants séparés.

13. Essieu arrière à traverse déformable en torsion selon l'une quelconque des revendications 9 à 12, **caractérisé en ce que** le premier corps en caoutchouc (9) est collé ou vulcanisé sur la rondelle de butée (15) ainsi que sur un collet (13) au niveau de la portion d'extrémité axiale (12) du manchon extérieur (7).

14. Essieu arrière à traverse déformable en torsion selon l'une quelconque des revendications 9 à 13, **caractérisé en ce que** les corps de butée (19, 20) sont réalisés ou fixés sur la périphérie intérieure du manchon extérieur (7).

15. Essieu arrière à traverse déformable en torsion selon l'une quelconque des revendications 9 à 14, **caractérisé en ce qu'**un bloc en caoutchouc (21, 22) sous la forme d'une portion partielle du deuxième corps en caoutchouc (10) est à chaque fois opposé aux corps de butée (19, 20) dans la direction du tourillon.

16. Essieu arrière à traverse déformable en torsion selon l'une quelconque des revendications 9 à 15, **caractérisé en ce que** les corps de butée (19, 20) sont réalisés sous forme de blocs en caoutchouc.

17. Essieu arrière à traverse déformable en torsion selon l'une quelconque des revendications 9 à 16, **caractérisé en ce que** la première chambre remplie de liquide (16) et la deuxième chambre remplie de liquide (17) sont connectées l'une à l'autre par au moins un canal d'étranglement (18).
